# EUROPÄISCHE PATENTANMELDUNG

(11) **EP 0 984 050 A2**
(43) Veröffentlichungstag der Anmeldung: **08.03.2000**
(21) Anmeldenummer: 99116460.9
(22) Anmeldetag: 21.08.1999
(51) Int. Cl.: C09J 7/00

(54) **Klebfolie und ihre Verwendung**

(30) Priorität: 04.09.1998 DE 19840361
(71) Anmelder: Beiersdorf Aktiengesellschaft, 20245 Hamburg (DE)
(72) Erfinder: Zimmermann, Dieter, 21635 Jork (DE); Kehler, Harald Dr., 21109 Hamburg (DE); Schulze, Walter, 25421 Pinneberg (DE)

(57) **Zusammenfassung**

Doppelseitig klebende Klebfolie für dauerhafte Klebbindungen mit einer Klebmasse auf Basis von
a) thermoplastischem Kautschuk und
b) klebrigmachenden Harzen, wobei
1. c) die Klebmasse ein Reaktivharz zugemischt enthält.

## Beschreibung

Die Erfindung betrifft eine doppelseitig klebende Klebfolie und ihre Verwendung für konstruktive, dauerhafte Verklebungen.

Klebfolien für konstruktive Verklebungen sind bekannt und im Handel erhältlich. Solche Klebfolien basieren auf Nitrilkautschuk und Phenolharzen und werden aus Lösungen hergestellt.

Klebfolien für leichte Verklebungen sind ebenfalls bekannt und im Handel erhältlich. Insbesondere sind Klebfolien für Verklebungen, die durch Ziehen in Richtung der Verklebungsebene wiederlösbar sind, bekannt und im Handel unter der Bezeichnung 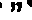 tesa Power-Strips® 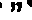 erhältlich. Damit hergestellte Verklebungen bieten kraftvollen Halt. Die erzielbaren Festigkeiten sind jedoch für konstruktive Verklebungen unzureichend.

DE 3714453, DE422849, DE 4233604, DE 4339604, DE 4428587, DE 4431914 und DE 19511288 beschreiben spezielle Ausführungen und Applikationen vorgenannter Klebfolien.
An die in diesen Druckschriften beschriebenen Klebfolien werden hohe Anforderungen gestellt, etwa:
- Für eine einwandfreie Funktion müssen sie eine für die jeweilige Anwendung ausreichende Anfaßklebrigkeit (für leichte Verklebung = geringer Anpreßdruck und für sofortige Belastung) und Verklebungsfestigkeit (während der Applikationsdauer) bieten.
- Für längerfristige Verklebungen ist eine entsprechende Alterungsbeständigkeit in der Klebfuge essentiell.
- Bei hohen mechanischen Beanspruchungen (hohe Scher- und Kippscherbelastungen) kann es bei Einsatz ungesättigter Styrolblockcopolymere (Styrol-, Isopren-, Styrol-Butadien-Blockcopolymere) zur Ausbildung von Ozonrissen im Klebstoff kommen und damit zum Einreißen der Klebfolien beim Ablöseprozeß oder zum Ablösen des verklebten Gegenstandes während der Applikationsdauer.
- Für viele Anwendungen ist es erwünscht, die Klebfolie zu pigmentieren. Der Einsatz von Pigmenten, z.B. TiO₂ kann sich jedoch insbesondere bei hohen Einsatzkonzentrationen nachteilig auf die Verklebungsfestigkeit auswirken. Aber auch diese Klebfolien sind für konstruktive Verklebungen unzureichend.

Verbindungen mit Produkten nach DE 33 31 016 (z.B. Power-Strip®) ergeben Festigkeiten im Bereich von 1 - 2 kg (nach BDF-Prüfung) JO PMX 100, Kippscherstandzeittest), Scherfestigkeiten von 30 - 30 N/cm² (Nach BDF-Klebfestigkeit JO PM 0020). Um in den Bereich der konstruktiven Klebverbindungen vorzudringen, sind jedoch höhere Werte erforderlich.

Es sind aus DE 33 31 016 C2 aber auch bereits Klebfolien der geschilderten Art bekannt, deren Masse wärmeaktivierbar eingestellt ist. Damit sind Produkte offenbart, die einem hot-melt ähnlich bei Raumtemperatur nicht kleben, unter Wärme jedoch kleben. Auch mit solchen Produkten lassen sich keine für Konstruktionsklebstoffe ausreichenden Festigkeiten erzielen.

Somit war es Aufgabe der Erfindung, das oben geforderte Anforderungsprofil insb. > 100 N/cm² Scherfestigkeit) zu erreichen.

Gelöst wird diese Aufgabe durch eine Klebfolie, wie sie in den Ansprüchen näher gekennzeichnet ist.

Insbesondere ergibt sich durch den Einsatz von Reaktivharz, vorzugsweise in Kombination mit Magnesiumoxid, in Kombination mit Wärmehärtung aus den DE 33 31 016 Formulierungen, eine Konstruktionsklebstofffolie mit einer gewissen Fixierhilfe, die für den Einsatz in der Praxis damit besonders geeignet ist.

Erfindungsgemäß geeignet sind als Reaktivharz insbesondere Alkylenphenolharze, die insbesondere basenreaktiv sind, wie sie als Klebstoffe auf Basis Polychloropren im Handel sind, z.B. als Alresen® PA 565 (Hoechst).

Vorteilhaft ist an der erfindungsgemäßen Klebfolie weiterhin, daß sie ohne Lösungsmittel hergestellt wird, insbesondere im Kneter /Extruder.

Im folgenden soll die Erfindung anhand von Beispielen erläutert werden, ohne sie jedoch unnötig einschränken zu wollen.

### Beispiel 1

In einer Rezeptur wurde das reaktive Alkylphenolharz (Alresen PA 565) der Fa. Hoechst mit eingesetzt (für Pentalyn H, Fa. Hercules), alles in Gewichtsteilen:

| | | |
|---|---|---|
| 53,5 Cariflex TR 1101 ® | Shell | (thermoplastischer Kautschuk) |
| 25,2 Pentalyn H ® | Hercules | (klebrigmachender Harz) |
| 16,9 Afresen PA 565 ® | Hoechst | (reaktives Alkylphenolharz) |
| 2,2 Kronos 2160 - TiO₂® | Kronos | (Titandioxid) |
| 2,2 Maglite DE - MgO® | Merck | (Magnesiumoxid) |

Die Herstellung erfolgte ohne Alresen PA 565® bei 180 °C im Kneter mit CO₂ Einleitung. Danach wurde auf 150 °C gekühlt, Alresen PA 565 ® zugegeben und kurz homogen eingearbeitet. Die Masse wurde extrudiert zu einer 0,2 ± 0,1 dicken Folie, die einseitig mit Trennpapier abgedeckt und zu Rollen geschnitten wird. Die Reißfestigkeit einer Verklebung mit dieser Rezeptur betrug:
ca 160 N/cm (im Zugversuch, Probekörper nach DIN EN 20527/2)

Formulierungen ohne Alresen 565 (dafür Pentalyn H) ergaben unter gleichen Bedingungen ca. 60 N/mm² Probeverklebungen Al/Al (geschliffen) bei 180 °C/1h unter leichtem Andruck einer beheizten Presse) ergaben Bindefestigkeiten ca. 10 N/mm² und liegen somit im Bereich der konstruktiven Klebstoffe (tesa- Power Strip® Festigkeiten liegen in der Größenordnung von 3,0 - 4,0 N/mm²).

Lagerungsversuch der Proben in Benzin 60/95/Aceton (1:1) (24h/RT):

| | | |
|---|---|---|
| Folie: | 120 °C Härtung/1h = | löslich |
| | 150 °C Härtung/1h = | gequollen |
| | 180 °C Härtung/1h = | unlöslich |

Bei entsprechenden Härtungsbedingungen wird also Lösungsmittelfestigkeit erzielt.

## Patentansprüche

1. Doppelseitig klebende Klebfolie für dauerhafte Klebbindungen mit einer Klebmasse auf Basis von
a) thermoplastischem Kautschuk und
b) klebrigmachenden Harzen, wobei
c) die Klebmasse ein Reaktivharz zugemischt enthält.

2. Klebfolie nach Anspruch 1, dadurch gekennzeichnet, daß das Reaktivharz ein reaktives Alkylphenolharz ist.

3. Klebfolie nach Anspruch 1, dadurch gekennzeichnet, daß das Reaktivharz ein durch Wärme aktivierbares Harz ist.

4. Klebfolie nach Anspruch 1, dadurch gekennzeichnet, daß das Reaktivharz von 10 bis 30 Gew.%, insb. von 15 bis 25 Gew.% der Klebmasse ausmacht.

5. Klebfolie nach Anspruch 1, dadurch gekennzeichnet, daß das Reaktivharz zusammen mit einem Metalloxid, insb. Magnesiumoxid eingesetzt wird.

6. Klebfolie nach Anspruch 5, dadurch gekennzeichnet, daß das Metalloxid 1 bis 3 Gew.%, insb. von 1,5 bis 2,5 Gew.% der Klebmasse ausmacht.

7. Klebfolie nach Anspruch 1, worin die Masse klebend eingestellt ist.

8. Klebfolie nach Anspruch 1, enthaltend Antioxidantien, UV-Stabilisatoren, Farbstoffe, Füllstoffe und/oder andere übliche Hilfsmittel.

9. Klebfolie nach Anspruch 1, mit einer Dicke von 0,2 ± 0,1 mm.

10. Klebfolie nach Anspruch 1, enthaltend als thermoplastischen Kautschuk ein Styrol-Butadien-Blockpolymer und als klebrigmachenden Harz ein Colophonium-Derivat.

11. Klebfolie nach Anspruch 1, wobei die Rohstoff-Mischung heiß geknetet und extrudiert ist.

12. Verwendung eine Klebfolie nach einem der Ansprüche 1 - 11 für konstruktive, dauerhafte Verklebungen unter Wärme-Härtung.
